# EUROPÄISCHE PATENTSCHRIFT

(11) **EP 0 392 261 B1**
(45) Veröffentlichungstag und Bekanntmachung des Hinweises auf die Patenterteilung: **11.08.1993**
(21) Anmeldenummer: 90105908.9
(22) Anmeldetag: 28.03.1990
(51) Int. Cl.: F16C 29/06

(54) **Kugelumlaufeinheit für eine Linearkugelführung**
Recirculating ball unit for a linear ball guide
Unité de recirculation de billes pour un guidage linéaire à billes

(30) Priorität: 08.04.1989 DE 3911501; 14.11.1989 DE 3937781
(43) Veröffentlichungstag der Anmeldung: 17.10.1990
(73) Patentinhaber: Jacob, Werner, D-60598 Frankfurt (DE)
(72) Erfinder: Jacob, Werner, D-60598 Frankfurt (DE)
(74) Vertreter: Harwardt, Günther, Dipl.-Ing.

(56) Entgegenhaltungen:
- EP-A- 0 137 042
- FR-A- 2 154 078
- FR-A- 2 319 802
- FR-A- 2 345 617
- FR-A- 2 357 775
- FR-A- 2 381 204
- US-A- 3 712 692
- US-A- 4 512 617

## Beschreibung

Die Erfindung betrifft eine Kugelumlaufeinheit für eine Linearkugelführung, die entlang einer im Querschnitt kreisförmigen Führungsschiene bewegbar ist, welche durch die Kugelumlaufeinheit wenigstens teilweise umschlossen ist, mit mehreren über den Querschnitt verteilt angeordneten, endlosen Kugelreihen, die in einem Käfig geführt sind, wobei die Kugelreihen jeweils einen Tragabschnitt, in welchem die Kugeln radial nach innen aus dem Käfig zwecks Anlage an der Führungsschiene herausragen, einen Rückführabschnitt und beide an den Enden verbindende Umlenkabschnitte aufweisen, wobei sich Tragabschnitt und Rückführabschnitt parallel zur Längsachse erstrecken und wobei der Käfig in Umfangsrichtung und axial in einem Grundkörper festgelegt und mehrteilig ausgebildet ist und wobei der Käfig aus Innensegmenten, die die Führung für die Tragabschnitte und Rückführabschnitte bilden, aus an deren axialen Enden angebrachten Kopfstücken und aus Umlenkabschnitten besteht.

Eine solche Linearkugelführung ist aus der FR-A-2 381 204 bekannt. Der Käfig besteht aus Segmenten, die jeweils einen Schlitz zur Führung der Kugeln im Tragabschnitt, eine Rille für deren Führung im Rückführabschnitt sowie die Enden der beiden verbindende Umlenkabschnitte aufweist.

Aus der EP-A-0 137 042 ist bekannt, für eine Linearführung mit Drehmomentabstützung die Innensegmente des Käfigs so auszubilden, daß jeweils ein Käfigsegment die Führung für zwei Kugelreihen zusammen mit Rillen, die im Grundkörper vorgesehen sind, übernimmt. Dies erfordert eine entsprechende Bearbeitung.

Bei Kugelumlaufeinheiten ist es ferner bekannt, daß sich die in den Tragabschnitten befindlichen Kugeln jeweils an Kugelbahnen abstützen, die in einer Hülse vorgesehen sind.

Die einzelnen Tragabschnitte sind um den Querschnitt der Führungsschiene herum gleichmäßig verteilt angeordnet. Der Käfig ist einteilig ausgebildet (DE-A-12 62 691). Die Fertigung eines solchen Käfigs ist kompliziert.

Der Erfindung liegt die Aufgabe zugrunde, eine Kugelumlaufeinheit, die entlang einer im Querschnitt kreisförmigen Führungsschiene bewegbar ist, vorzuschlagen, deren Käfig einfach herstellbar ist und eine Variabilität und Optimierung, bezüglich dessen Gestaltung, der Anzahl und der Anordnung der Tragreihen für einen gegebenen Durchmesser der Führungsschiene und des Außendurchmessers erlaubt.

Diese Aufgabe wird erfindungsgemäß dadurch gelöst, daß die Kopfstücke die Umlenkabschnitte (11) aufweisen, daß der Käfig aus Innensegmenten mit einer Führungsrille, welche einen Rückführabschnitt darstellt und/oder aus Innensegmenten mit zwei Führungsrillen, welche zwei Rückführabschnitte darstellen, besteht, daß die Innensegmente in Umfangsrichtung beidseitig jeweils eine axial verlaufende Führungsausnehmung eines Tragabschnittes aufweisen, daß die eine bzw. zwei Führungsrille(n) zwischen den Führungsausnehmungen angeordnet ist/sind, daß die Kopfstücke und die Innensegmente einander gegenüber zentriert sind, daß gegebenenfalls die Kopfstücke Stege aufweisen, wobei die Stege in Umfangsrichtung ein- oder beidseitig jeweils mit axial verlaufenden Führungsausnehmungen zur Führung der Kugeln in den Tragabschnitten versehen sind, und daß die Kugeln in den Tragabschnitten beidseitig von den Führungsausnehmungen zweier angrenzender Innensegmente oder daß die Kugeln an der einen Seite von der Führungsausnehmung eines Innensegmentes und an der anderen Seite von der Führungsausnehmung eines Steges geführt sind.

Die Teilung in Innensegmente und Kopfstücke erlaubt eine Fertigung mit einfachen Werkzeugen, da die Trennfuge im Bereich der Tragreihen liegt. Die Innensegmente und die Kopfstücke sind dadurch einfach aus Kunststoff durch Spritzgießen herstellbar.

Von Vorteil bei dieser Ausbildung ist ferner, daß auch eine Anordnung gewählt werden kann, bei der mindestens zwei Tragabschnitte in Umfangsrichtung der Führungsschiene mit einem kleinstmöglichen bestand zueinander angeordnet werden können und die Auflast in dieser Richtung in die Führungsschiene eingeleitet werden kann. Hierdurch ist insbesondere bei Gestaltung als geschlitzte Hülse eine nur geringe Kraftkomponente, die zu keiner Aufweitung der Hülse führt, gegeben.

Es können auch mehrere jeweils ein Paar bildende Kugelreihen umfangsverteilt auf dem Querschnitt der Führungsschiene angeordnet sein. Eine solche Anordnung ist zu wählen, je nachdem in welchen Richtungen bzw. Hauptrichtungen eine Einleitung der Kraft erfolgt. Die Kugelumlaufeinheit kann so ausgerichtet sein, daß die unmittelbar benachbarten und mit einem kleinstmöglichen Abstand zueinander angeordneten Tragabschnitte symmetrisch zur Kraftrichtung angeordnet sind.

Die beiden Arten von Innensegmenten erlauben verschiedene Kombinationen. Es können hierdurch Kugelumlaufeinheiten mit unterschiedlichen Anzahlen von Kugelreihen gebildet werden. Bei einer ersten Ausführungsform ist vorgesehen, daß der Käfig nur Innensegmente mit einer Führungsrille aufweist. Bei einer zweiten Ausführungsform ist vorgesehen, daß der Käfig nur Innensegmente mit zwei Führungsrillen und Kopfstücke mit angeformten Stegen aufweist. Bei einem eine Führungsschiene voll umschließenden Käfig sind an den Kopfstücken eine der halben Anzahl von Kugelreihen entsprechende Anzahl von Stegen angebracht. Bei einem eine Führungsschiene nur teilweise umschließenden Käfig sind die Kopfstücke mit einer der halben Anzahl von Kugelreihen, vermehrt um die Zahl eins, entsprechende Anzahl von Stegen versehen, von denen zwei jeweils nur eine Führungsausdehnung und die anderen jeweils zwei Führungsausnehmungen besitzen. Als dritte Alternative ist schließlich vorgesehen, daß der Käfig aus beiden Arten von Innensegmenten und Kopfstücken gebildet ist, wobei die ersten und zweiten Innensegmente sowie die Kopfstücke sich gegenseitig ergänzende Führungsausnehmungen zur Bildung der Tragabschnitte und der Umlenkabschnitte aufweisen.

Für den Fall der Ausführung des Käfigs nach dieser Maßgabe ist bei einem eine Führungsschiene voll umschließenden Käfig vorgesehen, zwei Stege mit je zwei Führungsausnehmungen für die in zwei benachbarten Tragabschnitten befindlichen Kugeln oder bei einem eine Führungsschiene teilweise umschließenden Käfig drei Stege vorzusehen, von denen einer zwei Führungsausnehmungen für die Kugeln zweier benachbarter Tragabschnitte und die beiden anderen Stege jeweils eine Führungsausnehmung für die Kugeln jeweils eines an den Schlitz angrenzenden Tragabschnittes aufweisen.

Die Stege der Kopfstücke erstrecken sich bevorzugt über die halbe Länge des Grundkörpers, so daß sie sich auf die ganze Länge hin, wenn sie von den Stirnflächen des Grundkörpers eingesteckt werden, zu einem durchgehenden Steg ergänzen.

Zur Halterung des Käfigs im Grundkörper ist vorgesehen, daß die Innensegmente mit radialen Vorsprüngen versehen sind, mit welchen sie in entsprechend geformten Stützausnehmungen oder Durchbrüchen des Grundkörpers eingreifen. Gleiches gilt auch für die Stege der Kopfstücke.

Da der Käfig und die Kopfstücke bevorzugt aus einem Kunststoffmaterial durch Spritzgießen hergestellt sind, ist zur Erzielung einer verbesserten Stabilität vorgesehen, daß die Innensegmente und die Kopfstücke über Zentrierstäbe miteinander verbunden sind. Bevorzugt sind diese in parallel zur Längsachse verlaufenden Bohrungen der Innensegmente und Kopfstücke eingesetzt. Zur Zentrierung der Kopfstücke am Grundkörper sind diese endseitig von an den Enden des Grundkörpers zentrierten Kappen überdeckt. Die Zentrierstäbe sind an den Kappen fixiert. Der axiale Zusammenhalt und die erhöhte Festigkeit erhält die Baueinheit durch diese Zentrierstäbe. Bevorzugt ist zur Fixierung vorgesehen, die Zentrierstäbe durch Schweißen, Verstemmen oder Verschrauben an den Kappen festzulegen.

Die größtmögliche Festigkeit und Käfigsteifheit wird erreicht, wenn die Zentrierstäbe in den Stegen der Kopfstücke oder bezüglich der Innensegmente die Zentrierstäbe zwischen den beiden benachbarten Führungsrillen angeordnet sind.

Die gegenseitige Führung der Kopfstücke und der Innensegmente kann auch oder zusätzlich durch sich gegenseitig ergänzende Zentrierungen erreicht werden.

Bevorzugt sind die Kopfstücke mit axial vorspringenden Zentrieransätzen und die Innensegmente mit entsprechenden Zentrierausnehmungen versehen.

Bevorzugte Ausführungsbeispiele sind anhand der Zeichnung erläutert.

Es zeigt
- Figur 1: eine erste Ausführungsform der Kugelumlaufeinheit mit einem beide Arten von Innensegmenten aufweisenden Käfig und mit einem geschlossenen Grundkörper, der die Führungsschiene vollständig umschließt,
- Figur 2: eine zweite Ausführungsform der Kugelumlaufeinheit, bei dem der Grundkörper die im Querschnitt kreisförmige Schiene nur teilweise umschließt, wobei der Käfig ebenfalls beide Arten von Innensegmenten aufweist,
- Figur 3: verschiedene Detailschnitte von Figur 1, nämlich
- Figur 3a: einen Schnitt A-A gemäß Figur 1,
- Figur 3b: einen Schnitt B-B gemäß Figur 1,
- Figur 3c: einen Schnitt C-C gemäß Figur 1,
- Figur 4: eine Seitenansicht eines Innensegmentes mit zwei Rückführabschnitten gemäß Pfeilrichtung F von Figur 6,
- Figur 5: einen Schnitt E-E gemäß Figur 6,
- Figur 6: einen Schnitt D-D gemäß Figur 4,
- Figur 7: eine Seitenansicht gemäß Pfeilrichtung J von Figur 9 eines Innensegmentes mit nur einem Rückführabschnitt,
- Figur 8: einen Schnitt H-H gemäß Figur 9,
- Figur 9: einen Schnitt G-G gemäß Figur 7,
- Figur 10: eine Ansicht auf die Stirnfläche eines Kopfstückes mit geschnittenem Steg gemäß Schnitt L-L von Figur 11 für eine Kugelumlaufeinheit nach Figur 1,
- Figur 11: einen Schnitt K-K gemäß Figur 10,
- Figur 12: einen Schnitt O-O gemäß Figur 13 durch einen Kopfsteg für eine Kugelumlaufeinheit gemäß Figur 2,
- Figur 13a: einen Schnitt M-M gemäß Figur 12,
- Figur 13b: einen Schnitt N-N gemäß Figur 12,
- Figur 14: eine alternative Ausführungsform der Kugelumlaufeinheit mit einem Käfig, der nur aus Innensegmenten mit zwei Führungsrillen aufgebaut ist,
- Figur 15: verschiedene Detailschnitte von Figur 14, nämlich
- Figur 15a: einen Schnitt A-A gemäß Fig. 14 (linke obere Hälfte der Fig. 15),
- Figur 15b: einen Schnitt C-C gemäß Fig. 14 (rechte Hälfte der Fig. 15),
- Figur 15c: einen Schnitt B-B gemäß Fig. 14 (linke untere Hälfte von Fig. 15),
- Figur 16: eine Seitenansicht eines Innensegmentes entsprechend dem gemäß Fig. 4, wobei jedoch Vorsprünge zur Sicherung in einem mit Durchbrüchen versehenen Grundkörper dargestellt sind,
- Figur 17: eine Ansicht auf eine Stirnfläche eines Kopfstückes für eine Ausführung gemäß Fig. 14 und 15 mit geschnittenen Stegen nach Schnitt J-J von Fig. 18,
- Figur 18: einen Schnitt H-H gemäß Fig. 17,
- Figur 19: einen Querschnitt durch eine weitere Ausführungsform einer Kugelumlaufeinheit mit einem Käfig, der nur aus Innensegmenten mit einer Führungsrille aufgebaut ist,
- Figur 20: eine Stirnansicht auf ein Kopfstück für eine Ausführungsform nach Fig. 19 und
- Figur 21: einen Schnitt K-K gemäß Fig. 20.

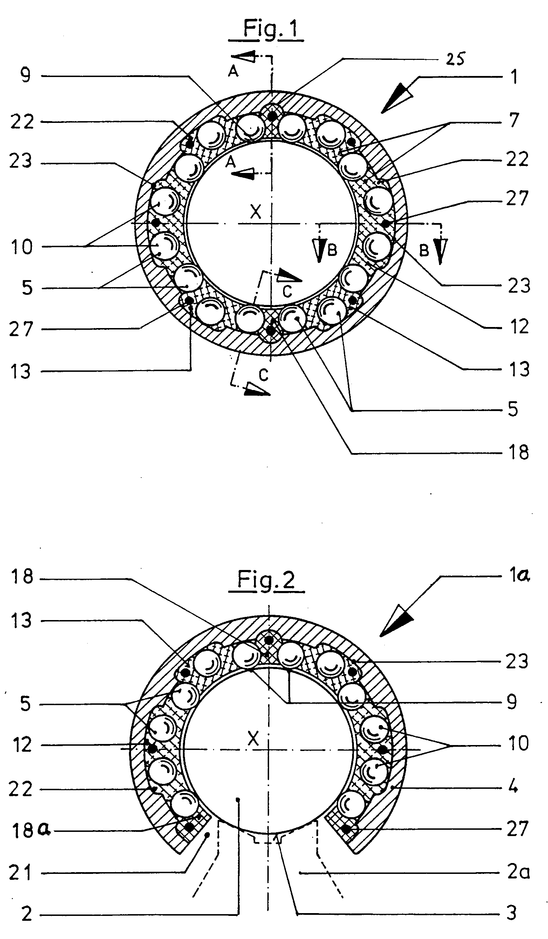

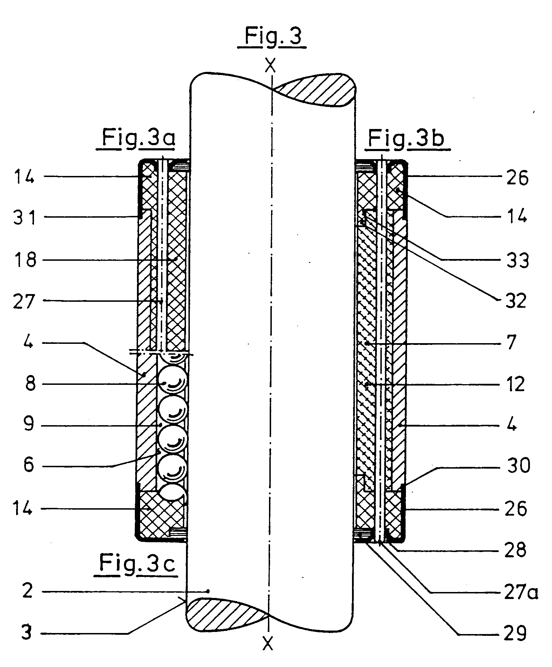

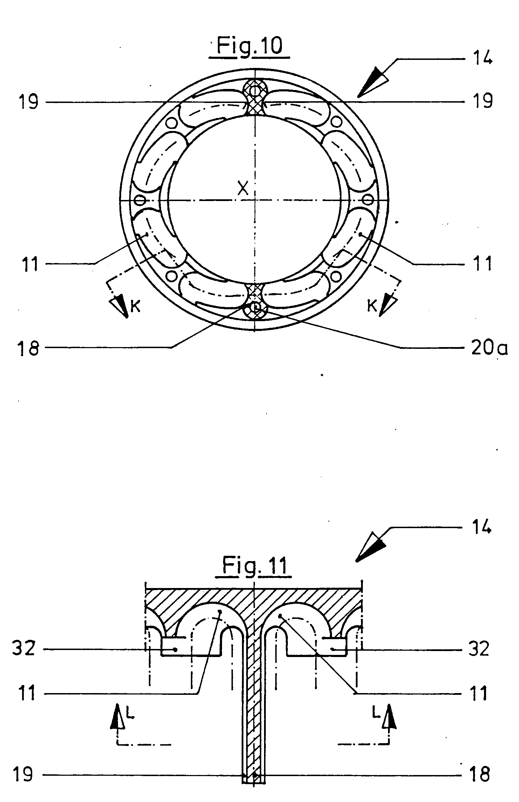

Die Kugelumlaufeinheit 1 nach den Figuren 1 und 3 umfaßt eine Führungsschiene 2 über deren gesamten Querschnitt. Auf der Außenfläche 3 der Führungsschiene 2 liegen die in den Tragabschnitten 9 befindlichen Kugeln 8 der Kugelreihen 5 an. Die Kugeln 8 der Kugelreihen 5 werden durch einen Käfig 7 gehalten. Im Tragabschnitt 9, das ist der Abschnitt, aus dem die Kugeln 8 radial nach innen aus dem Käfig 7 herausragen, stützen sie sich einerseits an der Außenfläche 3 der Führungsschiene 2 und andererseits an der Innenlaufbahn 6 des Grundkörpers 4 ab (s. Fig. 3a). Die Kugelreihen 5 werden jeweils aus den Tragabschnitten 9, den Rückführabschnitten 10 und beide an den Enden des Grundkörpers 4 verbindende Umlenkabschnitte 11 gebildet. In den Umlenkabschnitten 11, wie aus der Figur 10 ersichtlich, werden die Kugeln 5 von der Außenfläche 3 der Führungsschiene 2 radial nach außen weg geführt. Sie werden in den Rückführabschnitten 10 mit Spiel geführt. Die Kugelreihen 5 bilden jeweils eine endlose Reihe. Es ist erkennbar, daß bei der Ausführungsform nach Figur 1 zwei Paare von Kugelreihen 5 mit einem kleineren Umfangsabstand zueinander angeordnet sind, als die Tragabschnitte 9 dieser Paare 5 zu den in Umfangsrichtung folgenden Tragabschnitten 9 der nachfolgenden Kugelreihen 5.

Bei dem Ausführungsbeispiel nach den Figuren 1 und 3 ist ein Käfig 7 vorgesehen, der aus zwei Arten von Innensegmenten 12,13 und den beiden Kopfstücken 14 gebildet wird.

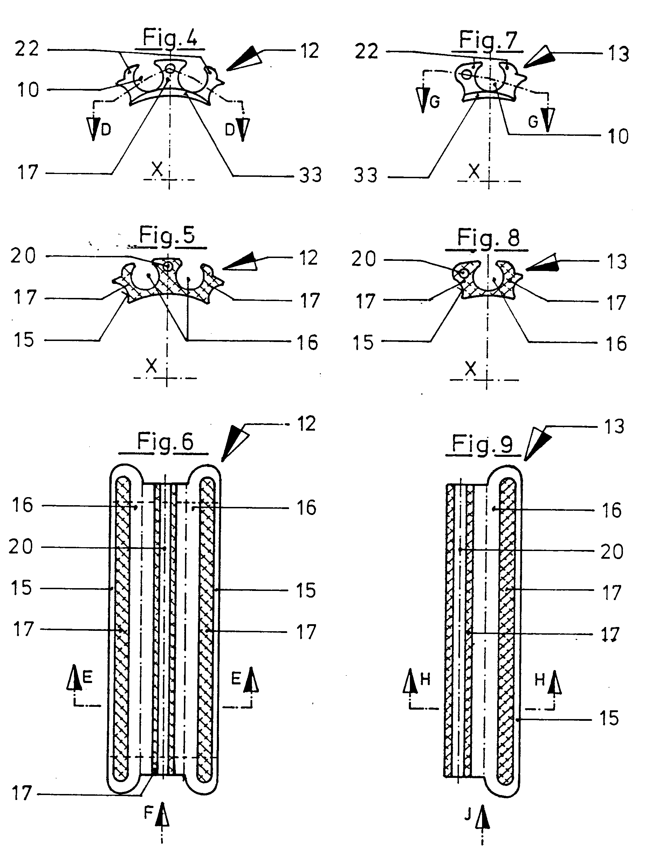

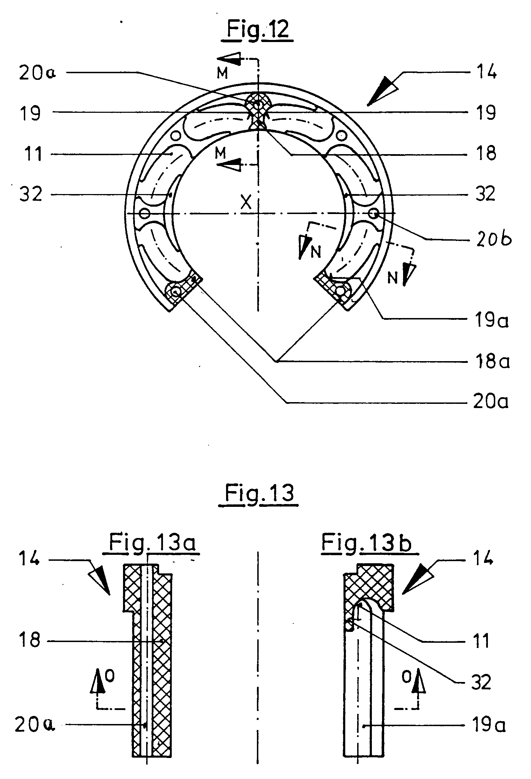

Die erste Art von Innensegmenten 13 ist in den Figuren 7 - 9 dargestellt und ein Innensegment 12 der zweiten Art in den Figuren 4-6. Es ist erkennbar, daß bei der Ausführungsform nach Figur 1 insgesamt vier erste Innensegmente 13 und zwei zweite Innensegmente 12 vorhanden sind. Die ersten Innensegmente 13 und zweiten Innensegmente 12 sind abwechselnd angeordnet. Das erste Innensegment 13 hat nur eine Führungsrille 16, welche den Rückführabschnitt 10 einer Kugelreihe 5 bildet. Die ersten Innensegmente 13 haben darüberhinaus seitliche Führungsausnehmungen 15, die zur Halterung und Führung der Kugeln 5 in den Tragabschnitten 9 dienen. Die Führungsrillen 16 für die Rückführabschnitte 10 werden seitlich durch Segmentstege 17 gebildet. In einem der Segmentstege 17 ist außerdem eine Bohrung 20 angebracht, die parallel zur Führungsachse der Führungsrillen 16 bzw. zur Längsachse X verläuft. An den Enden setzt sich die Führungsrille 16 fort und geht in die Führungsausnehmung 15 über. Diese halbkreisförmigen Verbindungen bilden zusammen mit den noch zu beschreibenden Kopfstücken 14 des Käfigs 7 die Umlenkabschnitte 11. Zwischen den ersten Innensegmenten 13 sind gemäß Figur 1 die zweiten Innensegmente 12, von denen eines in den Figuren 4 - 6 dargestellt ist, angeordnet. Die zweiten Innensegmente 12 umfassen zwei Rücklaufrillen 16 für zwei Kugelreihen 5. Zwischen den beiden Führungsrillen 16 ist ebenfalls ein Segmentsteg 17 vorgesehen. Seitlich sind begrenzende weitere Segmentstege 17 angeordnet, in denen die Führungsausnehmungen 15 für die Führung der in den Tragabschnitten 9 der Kugelreihen 5 befindlichen Kugeln 8 angebracht sind. In dem mittleren Segmentsteg 17 ist ebenfalls eine zur Achse X und zum Verlauf der Achse der Führungsrillen 16 parallele Durchgangsbohrung 20 vorhanden. An den axialen Enden der zweiten Innensegmente 12 sind zwischen den Führungsrillen 16 und den zugehörigen Führungsausnehmungen 15 halbkreisförmige Ausnehmungen angeordnet, die zusammen mit entsprechenden Ausnehmungen der Kopfstücke 14 gemäß den Figuren 10 und 11 die Umlenkabschnitte 11 bilden. Die ersten und zweiten Innensegmente 13,12 sind bei der Ausführungsform gemäß Figur 1 mit radialen Vorsprüngen 22 versehen, mit denen sie in Ausnehmungen 23, die sich parallel zur Achse X im Grundkörper 4 erstrecken, aufgenommen sind. Hierdurch wird eine drehfeste Verbindung zwischen dem Grundkörper 4 und den Innensegmenten 12,13 erzielt. Die Kopfstücke 14 sind von den Stirnflächen des Grundkörpers 4 her eingesetzt. Die Kopfstücke 14 und die Innensegmente 12,13 sind einander gegenüber zentriert. Hierzu weisen die Innensegmente 12,13 Zentrierausnehmungen 33 auf, in welche dazu passende Zentrieransätze 32 der Kopfstücke 14 hineinragen. Die Kopfstücke 14 haben Stege 18, die sich entlang der Längsachse X etwa über die halbe Länge des Grundkörpers 4 erstrecken und sich entsprechend gegenseitig ergänzen. Sie stoßen mit ihren Stirnflächen aneinander. Die Stege 18 sind auf ihrer radial äußeren Fläche der Form einer Ausnehmung 25 des Grundkörpers 4 angepaßt. Die Stege 18 weisen seitlich zu den Kugeln 5 der Tragabschnitte 9 hin Führungsausnehmungen 19 auf, die die Kugeln 8 teilweise umfassen und zusammen mit den Führungsausnehmungen 15 der in Umfangsrichtung folgenden Innensegmente 13 die Kugeln 8 gegen radiales Herausfallen nach innen im unmontierten Zustand der Kugelumlaufeinheit, d.h. dann, wenn diese noch nicht auf einer Führungsschiene 2 montiert ist, halten. Die Führungsausnehmungen 19 der Kopfstücke 14 gehen in Ausnehmungen über, die die Umlenkabschnitte 11 bilden. Die Kopfstücke 14 besitzen durch ihre Stege 18 hindurchverlaufende Bohrungen 20a sowie in dem übrigen flanschartig erweiterten Bereich Bohrungen 20b auf, die zu den Bohrungen 20 der Innensegmente 12,13 korrespondierend angeordnet sind. Die Kopfstücke 14 werden von Kappen 26 überdeckt, die beispielsweise aus Blech hergestellt sind und auf einer Zentrierfläche 30 des Grundkörpers 4 zentriert sind. Sie stützen sich mit ihren Stirnrändern axial an entsprechenden Absätzen 31 des Grundkörpers 4 ab. Sie besitzen zu den Bohrungen 20,20a und 20b in den Innensegmenten 12,13 bzw. Kopfstücken 14 korrespondierende Bohrungen 28. In allen vorgenannten Bohrungen sind Zentrierstäbe 27 eingesteckt. Diese sind in den Bohrungen 28 der Kappen 26 festgelegt. Beispielsweise werden die aus den Bohrungen 28 der Kappen 26 herausragenden Enden 27a der Zentrierstäbe 27 durch Verstemmen oder Verschweißen gesichert.

Zusätzlich dienen die Kappen 26 zur Halterung von Dichtungen 29, die die Kugelumlaufeinheit 1 gegenüber der Außenfläche 3 der Führungsschiene 2 nach außen hin abdichten. Die Zentrierstäbe 27 sorgen für die gegenseitige Ausrichtung der Innensegmente 12,13 sowie Stege 18 der Kopfstücke 24 sowie zur Erzielung einer höheren Festigkeit der aus diesen Bauteilen gebildeten Baueinheit des Käfigs 7.

In Figur 2 ist eine alternative Ausführungsform für eine Kugelumlaufeinheit 1a dargestellt. Diese weist einen Grundkörper 4 auf, der geschlitzt ist und wobei die Führungsschiene 2 nur teilweise umfaßt ist. Der Schlitz des Grundkörpers ist mit 21 bezeichnet. Die Führungsschiene 2 ist an einem Befestigungselement 2a angebracht, welches widerum auf einer Unterlage befestigbar ist. Insgesamt sind nur sechs Kugelreihen 5 vorhanden. Es sind zwei erste Innensegmente 13 und zwei zweite Innensegmente 12 vorhanden, welche, wie im Zusammenhang mit Figur 1 beschrieben, entsprechend den Figuren 7-9 bzw. 4-6 gestaltet sind. Die Kopfstücke 14 sind aufgrund dieser Anordnung anders gestaltet. Eine solche Gestaltung ist aus Figur 12 und 13 ersichtlich. Die Kopfstücke 14 decken jeweils nur den Segmentabschnitt ab. Sie besitzen einen Steg 18, der zwischen die Tragabschnitte 9 zweier ein Paar bildender Kugelreihen 5 hineinragt und besitzen zur Begrenzung zu dem Schlitz 21 des Grundkörpers 4 hin jeweils zwei Halbstege 18a, die jeweils nur eine Führungsausnehmung 19a aufweisen.

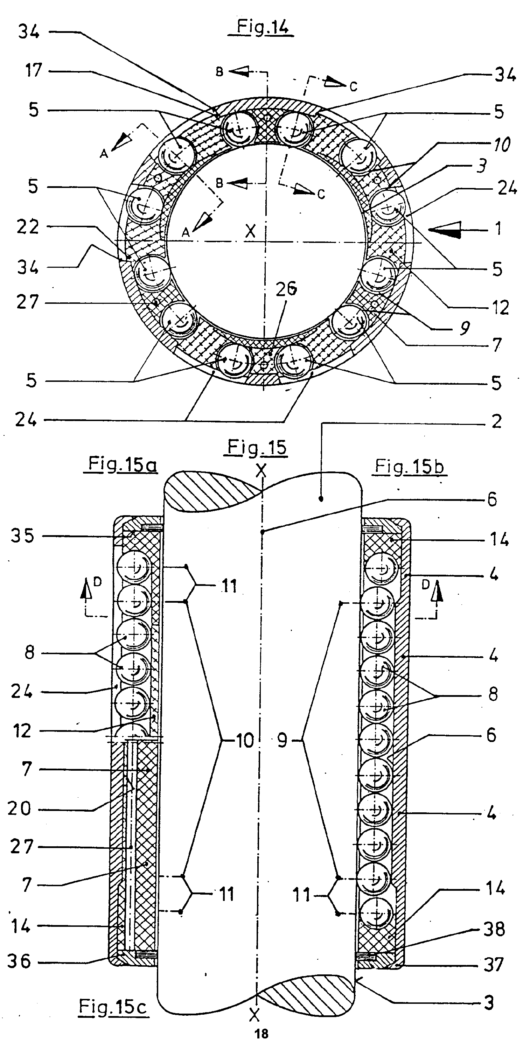

Die Kugelumlaufeinheit 1 gemäß den Fig. 14 bis 16 ist entlang der Außenfläche 3 einer Führungsschiene 2, die einen kreisförmigen Querschnitt hat, über Kugeln 8 bewegbar.

Die Bewegung erfolgt entlang der Längsachse X der Führungsschiene 2, welche gleichzeitig die Längsachse für die Kugelumlaufhülse 1 ist. Die Kugelumlaufhülse 1 besteht aus einem als Hülse gestalteten Grundkörper 4 und den in dem Käfig 7 geführten Kugeln 8. Es sind insgesamt sechs Kugelreihen 5 auf dem Umfang des Querschnitts der Führungsschiene 2 verteilt angeordnet. Jede einzelne Kugelreihe 5 umfaßt einen Tragabschnitt 9, in welchem die Kugeln 8 aus dem Käfig 7 radial nach innen hervorragen und an der Außenfläche 3 der Führungsschiene 2 anliegen, einem Rückführabschnitt 10, in welchem die Kugeln 8 von der Außenfläche 3 abgehoben sind und in dem sie lastfrei umlaufen können sowie den die Enden der beiden Abschnitte, nämlich Tragabschnitt 9 und Rückführabschnitt 10, verbindenden Umlenkabschnitte 11. Insbesondere aus Figur 14,15 ist erkennbar, daß die Rückführabschnitte 10 zweier benachbarter Kugelreihen 5 unmittelbar aneinandergrenzend angeordnet sind. Entsprechend sind auch im Uhrzeigersinne gesehen die beiden Tragabschnitte 9 der darauf folgenden beiden Kugelreihen 5 einander unmittelbar benachbart. Über die Axialerstreckung des Tragabschnittes 9 ist der Grundkörper 4, mit einer dicken Wandung und zu den Enden hin mit einer dünnen Wandung ausgebildet. Im Bereich der Rückführabschnitte 10 sind parallel zur Achse X sich erstreckende Durchbrüche 24 vorgesehen, in welche die sich in den Rückführabschnitten 10 befindlichen Kugeln 8 hineinragen. Der Käfig 7 besteht aus drei Innensegmenten 12 der zweiten Art und den Kopfstücken 14. Die Anzahl von Innensegmenten 12 entspricht der halben Anzahl der vorgesehenen Kugelreihen 5.

Da beim vorliegenden Ausführungsbeispiel sechs Kugelreihen 5 vorgesehen sind, sind somit drei Innensegmente 12 vorzusehen. Die Innensegmente 12 sind im wesentlichen entsprechend denen nach Fig. 4 - 16 ausgebildet.

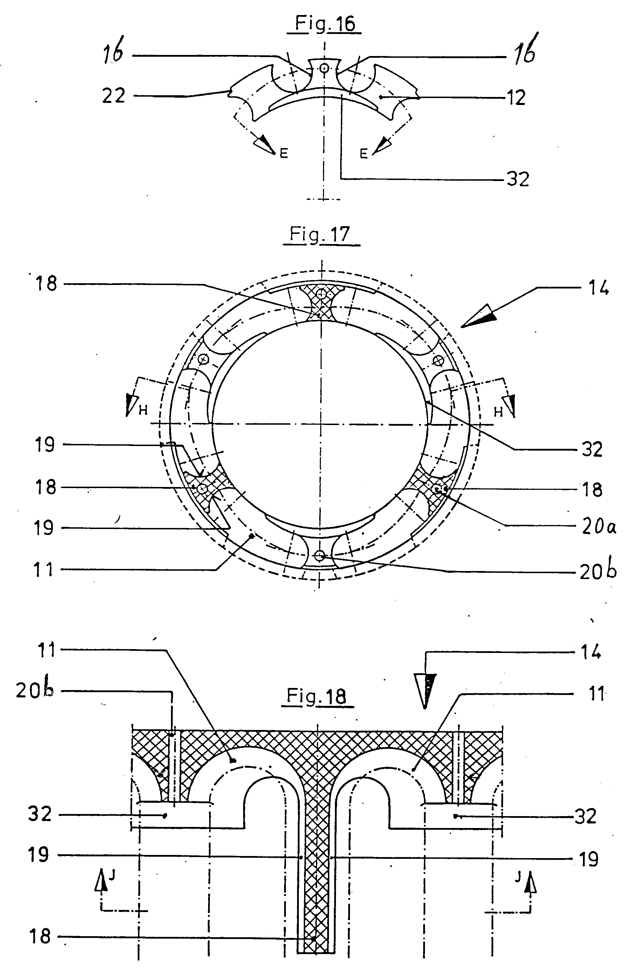

Der Unterschied besteht nur darin, daß die Innensegmente 12, wie aus Fig. 16 ersichtlich, jeweils Vorsprünge 22 besitzen, mit denen sie sich an den Begrenzungsflächen 34 der Durchbrüche 24 in die beiden entgegengesetzen Umfangsrichtungen des Grundkörpers 4, im Querschnitt gesehen, abstützen. Hierdurch werden die Innensegmente 12 gegenüber den Durchbrüchen 24 lagezentriert. Darüberhinaus können die Durchbrüche 24 genutzt werden, um die Kugeln 8, die sich in den Rückführabschnitten 10 befinden, in diese radial hineinragen zu lassen, um insgesamt zu einer kompakteren Bauausführung und Nutzung des radialen Bauraumes zu kommen.

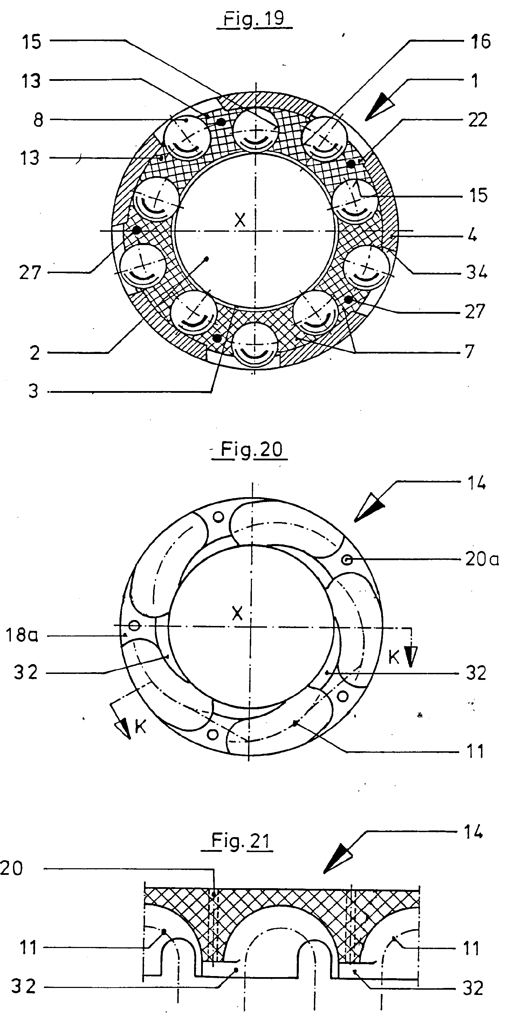

Ferner besitzen die Innensegmente 12 an den Enden innen Zentrierausnehmungen 33, in welche entsprechende Zentrieransätze 32 hineinragen, die zu den Kopfstücken 14 gehören. Die Ausbildung der Kopfstücke 14 mit den entsprechenden Zentrieransätzen 32 ist aus den Figuren 17 und 18 ersichtlich. Die beiden an den Enden der Innensegmente 12 anzubringenden Kopfstücke 14 überdecken den gesamten Umfangsbereich, also insgesamt drei Innensegmente 12. Die Zentrieransätze 32 ragen kopfseitig in den Bereich der Führungsrillen 16 hinein.

Ferner weisen die beiden Kopfstücke 14 axial vorstehende Stege 18 auf, und zwar in einer Anzahl, die der halben Anzahl der Kugelreihen 5 entspricht und die sich längenmäßig etwa bis zur halben Länge der Innensegmente 12 erstrecken und dort mit ihren Stirnflächen aneinanderstoßen.

Die Stege 18 haben ebenfalls Führungsausnehmungen 19 zur Führung der Kugeln 8 in den Tragabschnitten 9. Ansonsten sind ebenfalls Zentrierstäbe 27 zur Lageausrichtung der Kopfstücke 14 gegenüber den Innensegmenten 12 vorhanden.

Die Kopfstücke 14 sind von den Öffnungsseiten des Grundkörpers 4 aus eingesetzt. An die Stirnflächen 35 der Kopfstücke 14 anschließend sind Halteringe 36 anliegend eingesetzt. Die Halteringe 36 werden durch den Bördelrand 37, der durch Umbördeln der Wandung des Grundkörpers 4 erzielt wird, in ihrer Lage fixiert und halten die Baueinheit, bestehend aus Grundkörper 4, dem Käfig 7 und den Kugeln 8 zusammen. Die Halteringe 36 können mit Ausnehmungen versehen sein, in die Dichtungen 38 eingesetzt sind, die die Baueinheit gegenüber der Außenfläche 3 der Führungsschiene 2 abdichten.

Aus den Figuren 19 bis 21 ist eine weitere Ausführungsform einer Kugelumlaufeinheit 1 ersichtlich, deren Käfig 7 nur aus Innensegmenten 13 der ersten Art besteht, die jeweils nur eine Führungsrille 16 und seitliche Führungsausnehmungen 15 aufweisen. Die seitlichen Führungsausnehmungen 15 zweier in Umfangsrichtung aneinandergrenzender erster Innensegmente 13 führen die Kugeln 8, die sich in den Tragabschnitten 9 befinden, in welchen die Kugeln 8 aus dem Käfig 7 herausragen und an der Außenfläche 3 der Führungsschiene 2 anliegen.

Der Grundkörper 4 ist mit Durchbrüchen 24 versehen, um eine besondere kompakte Ausführungsform zu erreichen. Anders als bei den vorbeschriebenen Ausführungsformen sind bei der Ausführungsform nach der Figur 19 die Kopfstücke 14 nicht mit Stegen versehen, sondern sind mit einer glatten Stirnfläche ausgeführt, die an den Stirnflächen der Innensegmente 13 zur Anlage kommen. Zur Verbindung sind ebenfalls in Bohrungen eingesetzte Zentrierstäbe 27 vorgesehen. Darüber hinaus besitzen die Innensegmente 13 und die Kopfstücke 14 wie bei den vorbeschriebenen Kopfstücken Zentrieransätze 32 bzw. entsprechende Zentrierausnehmungen 33.

### Bezugszeichenliste

- 1,1a: Kugelumlaufeinheit
- 2: Führungssschiene
- 2a: Befestigungselement
- 3: Außenfläche der Führungsschiene
- 4: Grundkörper
- 5: Kugelreihen
- 6: Innenlaufbahn des Grundkörpers
- 7: Käfig
- 8: Kugel
- 9: Tragabschnitt
- 10: Rückführabschnitt
- 11: Umlenkabschnitt
- 12: zweite Innensegmente
- 13: erste Innensegmente
- 14: Kopfstück
- 15: Führungsausnehmung an Innensegmenten
- 16: Führungsrillen in Innensegmenten
- 17: Segmentsteg
- 18,18a: Stege der Kopfstücke
- 19,19a: Führungsausnehmung der Stege der Kopfstücke
- 20,20a,20b: Bohrungen für Zentrierstäbe
- 21: Schlitz
- 22: Vorsprung der Innensegmente
- 23: Ausnehmung im Grundkörper
- 24: Durchbruch im Grundkörper
- 25: Ausnehmung im Grundkörper für Kopfstückstege
- 26: Kappe
- 27: Zentrierstab
- 27a: Ende der Zentrierstäbe
- 28: Bohrung in Kappe
- 29: Dichtung
- 30: Zentrierfläche
- 31: Absatz
- 32: Zentrieransatz Kopfstück
- 33: Zentrierausnehmung Innensegment
- 34: Begrenzungsfläche der Durchbrüche
- 35: Stirnfläche
- 36: Haltering
- 37: Bördelrand
- 38: Dichtung
- X: Längsachse

## Patentansprüche

1. Kugelumlaufeinheit (1,1a) für eine Linearkugelführung, die entlang einer im Querschnitt kreisförmigen Führungsschiene (2) bewegbar ist, welche durch die Kugelumlaufeinheit wenigstens teilweise umschlossen ist, mit mehreren über den Querschnitt verteilt angeordneten, endlosen Kugelreihen (5), die in einem Käfig (7) geführt sind, wobei die Kugelreihen (5) jeweils einen Tragabschnitt (9), in welchem die Kugeln (8) radial nach innen aus dem Käfig (7) zwecks Anlage an der Führungsschiene (2) herausragen, einen Rückführabschnitt (10) und beide an den Enden verbindende Umlenkabschnitte (11) aufweisen, wobei sich Tragabschnitt (9) und Rückführabschnitt (10) parallel zur Längsachse (X) erstrecken und wobei der Käfig (7) in Umfangsrichtung und axial in einem Grundkörper (4) festgelegt und mehrteilig ausgebildet ist und wobei der Käfig aus Innensegmenten (12,13), die die Führung für die Tragabschnitte (9) und Rückführabschnitte (10) bilden, aus an deren axialen Enden angebrachten Kopfstücken (14) und aus Umlenkabschnitten (11) besteht,
dadurch gekennzeichnet,
daß die Kopfstücke (14) die Umlenkabschnitte (11) aufweisen, daß der Käfig (7) aus Innensegmenten (13) mit einer Führungsrille (16), welche einen Rückführabschnitt (10) darstellt und/oder aus Innensegmenten (12) mit zwei Führungsrillen (16), welche zwei Rückführabschnitte (10) darstellen, besteht, daß die Innensegmente (12,13) in Umfangsrichtung beidseitig jeweils eine axial verlaufende Führungsausnehmung (15) eines Tragabschnittes (9) aufweisen, daß die eine bzw. zwei Führungsrille(n) (16) zwischen den Führungsausnehmungen (15) angeordnet ist/sind, daß die Kopfstücke (14) und die Innensegmente (12,13) einander gegenüber zentriert sind, daß gegebenenfalls die Kopfstücke (14) Stege (18,18a) aufweisen, wobei die Stege (18,18a) in Umfangsrichtung ein- oder beidseitig jeweils mit axial verlaufenden Führungsausnehmungen (19,19a) zur Führung der Kugeln (8) in den Tragabschnitten (9) versehen sind, und daß die Kugeln (8) in den Tragabschnitten (9) beidseitig von den Führungsausnehmungen (15) zweier angrenzender Innensegmente oder daß die Kugeln an der einen Seite von der Führungsausnehmung (15) eines Innensegmentes (12,13) und an der anderen Seite von der Führungsausnehmung (19,19a) eines Steges (18,18a) geführt sind.

2. Kugelumlaufeinheit nach Anspruch 1,
dadurch gekennzeichnet,
daß der Käfig (7) aus Innensegmenten (12) mit zwei Führungsrillen (16) und bei einem eine Führungsschiene (2) voll umschließenden Käfig (7) (Fig. 14,15) Kopfstücke (14) mit einer der halben Anzahl von Kugelreihen (5) entsprechenden Anzahl von Stegen (18), die seitlich mit Führungsausnehmungen (19) zur Führung der Kugeln (8) in den Tragabschnitten (9) versehen sind, oder bei einem eine Führungsschiene (2) nur teilweise umschließenden Käfig (7) Kopfstücke (14) mit einer der halben Anzahl von Kugelreihen (5), vermehrt um die Zahl eins entsprechenden Anzahl von Stegen (18,18a), von denen zwei (18a) jeweils nur eine Führungsausnehmung (19a) und die anderen jeweils zwei Führungsausnehmungen (19) besitzen, besteht.

3. Kugelumlaufeinheit nach Anspruch 1,
dadurch gekennzeichnet,
daß der Käfig (7) aus Innensegmenten (12,13) mit einer und solchen mit zwei Führungsrillen (16) sowie Kopfstücken (14) besteht, welche sich gegenseitig ergänzende Führungsausnehmungen (15,19,19a) zur Bildung der Tragabschnitte (9) und der Umlenkabschnitte (11) aufweisen.

4. Kugelumlaufeinheit nach Anspruch 3,
dadurch gekennzeichnet,
daß bei einem eine Führungsschiene voll umschließenden Käfig (7, Fig. 1) zwei Stege (18) mit zwei Führugsausnehmungen (19) für die in zwei benachbarten Tragabschnitten (9) befindlichen Kugeln oder bei einem eine Führungsschiene teilweise umschließenden Käfig drei Stege vorgesehen sind, von denen einer zwei Führungsausnehmungen für die Kugeln zweier benachbarter Tragabschnitte (9) und die beiden anderen Stege (18a) jeweils eine Führungsausnehmung (19a) für die Kugeln (8) jeweils eines an den Schlitz angrenzenden Tragabschnittes (9) aufweisen.

5. Kugelumlaufeinheit nach Anspruch 1,
dadurch gekennzeichnet,
daß die Innensegmente (12,13) mit radialen Vorsprüngen (22) versehen sind, mit welchen sie in entsprechend geformten Stützausnehmungen (23) oder Durchbrüchen (24) des Grundkörpers (4) eingreifen.

6. Kugelumlaufeinheit nach Anspruch 1,
dadurch gekennzeichnet,
daß die Innensegmente (12,13) und die Kopfstücke (14) über Zentrierstäbe (27), miteinander verbunden sind.

7. Kugelumlaufeinheit nach Anspruch 6,
dadurch gekennzeichnet,
daß die Zentrierstäbe (27) in parallel zur Längsachse (X) verlaufende Bohrungen (20,20a,20b) der Innensegmente (12,13) und Kopfstücke (14) eingesetzt sind.

8. Kugelumlaufheit nach Anspruch 6,
dadurch gekennzeichnet,
daß die Kopfstücke (14) endseitig von an den Enden des Grundkörpers (4) zentrierten Kappen (26) überdeckt sind.

9. Kugelumlaufeinheit nach Anspruch 8,
dadurch gekennzeichnet,
daß die Zentrierstäbe (27) an den Kappen (26) fixiert sind.

10. Kugelumlaufeinheit nach Anspruch 9,
dadurch gekennzeichnet,
daß die Zentrierstäbe (27) durch Schweißen, Verstemmen oder Verschrauben an den Kappen (26) fixiert sind.

11. Kugelumlaufeinheit nach Anspruch 6,
dadurch gekennzeichnet,
daß die Zentrierstäbe (27) in den Stegen (18,18a) der Kopfstücke (14) angeordnet sind.

12. Kugelumlaufeinheit nach Anspruch 6,
dadurch gekennzeichnet,
daß die Zentrierstäbe (27) zwischen den beiden benachbarten Führungsrillen (16) der Innensegmente (12) angeordnet sind.

13. Kugelumlaufeinheit nach Anspruch 1,
dadurch gekennzeichnet,
daß die Kopfstücke (14) und die Innensegmente (12,13) mit sich gegenseitig ergänzenden Zentrierungen (32,33) versehen sind.

14. Kugelumlaufeinheit nach Anspruch 13,
dadurch gekennzeichnet,
daß die Kopfstücke (14) mit axial vorspringenden Zentrieransätzen (32) und die Innensegmente (12,13) mit entsprechenden Zentrierausnehmungen (33) versehen sind.

## Claims

1. A ball circulation unit (1, 1a) for linear ball guiding means, which is movable along a guiding rail (2) which comprises a circular cross-section and which is at least partially enclosed by the ball circulation unit, having a plurality of continuous ball rows (5) which are distributed across the cross-section and which are guided in a cage (7), with the ball rows (5) each comprising a carrying portion (9) in which the balls (8) project radially inwardly from the cage (7) for the purpose of contacting the guiding rail (2), a returning portion (10) and deflecting portions (11) connecting said two portions at their ends, with the carrying portion (9) and the returning portion (10) extending parallel to the longitudinal axis (X) and with the cage (7) being circumferentially and axially secured in a base (4) and having a multi-component design and with the cage consisting of inner segments (12, 13) constituting the guiding means for the carrying portions (9) and returning portions (10), of head pieces (14) provided at their axial ends and of deflecting portions (11),
characterised in
that the head pieces (14) comprise the deflecting portions (11), that the cage (7) consists of inner segments (13) with one guiding groove (16) constituting a returning portion (10) and/or of inner segments (12) with two guiding grooves (16) constituting two returning portions, that the inner segments (12, 13), in the circumferential direction, on both sides, each comprise an axially extending guiding recess (15) of a carrying portion (9), that the guiding groove(s) (16) is/are arranged between the guiding recesses (15), that the head pieces (14) and the inner segments (12, 13) are centred relative to one another, that, optionally, the head pieces (14) comprise webs (18, 18a), with the webs (18, 18a), in the circumferential direction, on one side or both sides, each being provided with axially extending guiding recesses (19, 19a) for guiding the balls (8) in the carrying portions (9), and that the balls (8) are guided in the carrying portions (9) on both sides by the guiding recesses (15) of two adjoining inner segments or that the balls are guided on the one side by the guiding recess (15) of an inner segment (12, 13) and on the other side by the guiding recess (19, 19a) of a web (18, 18a).

2. A ball circulation unit according to claim 1,
characterised in
that the cage (7) consists of inner segments (12) with two guiding grooves (16) and, with a cage (7) fully enclosing a guiding rail (2) (Figures 14, 15), of head pieces (14) with webs (18) whose number corresponds to half the number of ball rows (5) and which, at their sides, are provided with guiding recesses (19) for guiding the balls (8) in the carrying portions (9) or, with the cage (7) only partially enclosing a guiding rail (2), of head pieces (14) with webs (18, 18a) whose number corresponds to half the number of ball rows (5) increased by the number 1, with two webs (18a) each comprising only one guiding recess (19a) and the others each comprising two guiding recesses (19).

3. A ball circulation unit according to claim 1,
characterised in
that the cage (7) consists of inner segments (12, 13) with one guiding groove (16) and of inner segments (12, 13) with two guiding grooves (16), and of head pieces (14) comprising mutually complementary guiding recesses (15, 19, 19a) for forming the carrying portions (9) and the deflecting portions (11).

4. A ball circulation unit according to claim 3,
characterised in
that, with a cage (7) fully enclosing a guiding rail (Figure 1), there are provided two webs (18) with two guiding recesses (19) for the balls positioned in two adjoining carrying portions (9) or, with a cage enclosing a guiding rail only partially, there are provided three webs one of which comprises two guiding recesses for the balls of two adjoining carrying portions (9), with the two other webs (18a) each comprising one guiding recess (19a) for the balls (8) of each of the carrying portions (9) adjoining the slot.

5. A ball circulation unit according to claim 1,
characterised in
that the inner segments (12, 13) are provided with radial projections (22) engaging correspondingly shaped supporting recesses (23) or apertures (24) of the base (4).

6. A ball circulation unit according to claim 1,
characterised in
that the inner segments (12, 13) and the head pieces (14) are connected to one another via centring bars (27).

7. A ball circulation unit according to claim 6,
characterised in
that the centring bars (27) are inserted into bores (20, 20a, 20b) of the inner segments (12, 13) and of the head pieces (14), which bores extend parallel to the longitudinal axis (X).

8. A ball circulation unit according to claim 6,
characterised in
that the head pieces (14), at their end faces, are covered by caps (26) centred at the ends of the base (4).

9. A ball circulation unit according to claim 8,
characterised in
that the centring bars (27) are fixed to the caps (26).

10. A ball circulation unit according to claim 9,
characterised in
that the centring bars (27) are secured to the caps (26) by welding, caulking or bolting.

11. A ball circulation unit according to claim 6,
characterised in
that the centring bars (27) are arranged in the webs (18, 18a) of the head pieces (14).

12. A ball circulation unit according to claim 6,
characterised in
that the centring bars (27) are arranged between the two adjoining guiding grooves (16) of the inner segments (12).

13. A ball circulation unit according to claim 1,
characterised in
that the head pieces (14) and the inner segments (12, 13) are provided with mutually complementary centring means (32, 33).

14. A ball circulation unit according to claim 13,
characterised in
that the head pieces (14) are provided with axially projecting centring projections (32) and that the inner segments (12, 13) are provided with corresponding centring recesses (33).

## Revendications

1. Unité à recyclage de billes (1, 1a) pour un guide rectiligne à billes, laquelle est mobile le long d'un rail de guidage (2) ayant une section circulaire, ce rail étant au moins partiellement entouré par l'unité à recyclage de billes, celle-ci comportant : plusieurs rangées sans fin de billes (5), réparties sur la section droite, guidées dans une cage (7), ces rangées de billes (5) présentant chacune une partie porteuse (9) dans laquelle les billes (8) débordent de la cage (7), radialement vers l'intérieur, afin de s'appliquer contre le rail de guidage (2), une partie pour recyclage (10), et des parties renvoi (11) reliant les deux parties précédentes aux extrémités, la partie porteuse (9) et la partie pour recyclage (10) s'étendant parallèlement à l'axe longitudinal (X), et la cage (7) étant immobilisée en direction circonférentielle et axialement dans un corps de base (4) et étant réalisée en plusieurs pièces, cette cage étant constituée par des segments intérieurs (12, 13) qui forment le guidage pour les parties porteuses (9) et les parties pour recyclage (10), et par des pièces de tête (14) agencées à ses extrémités axiales, et par des parties renvoi (11),
caractérisée
par le fait que les pièces de tête (14) présentent les parties renvoi (11), par le fait que la cage (7) est constituée par des segments intérieurs (13) avec une gorge de guidage (16) qui constitue une partie pour recyclage (10), et/ou par des serpents intérieurs (12) avec deux gorges de guidage (16) qui constituent deux parties pour recyclage (10), par le fait que les segments intérieurs (12, 13) présentent chacun, des deux côtés en direction circonférentielle, un évidement de guidage s'étendant axialement, pour le guidage d'une partie porteuse (9), par le fait que la gorge de guidage ou, selon le cas, les deux gorges de guidage (16), est ou sont agencée(s) entre les évidements de guidage (15), par le fait que les pièces de tête (14) et les segments intérieurs (12, 13) sont mutuellement centrés, par le fait que les pièces de tête (14) présentent éventuellement des parties intermédiaires ou parties pleines (18, 18a), lesdites parties intermédiaires (18, 18a) étant munies, chacune d'un ou deux côtés en direction circonférentielle, d'évidements s'étendant axialement (19, 19a) pour guider les billes (8) dans les parties porteuses (9), et par le fait que les billes (8) dans les parties porteuses (9) sont guidées des deux côtés par les évidements de guidage (15) de deux segments intérieurs adjacents, ou par le fait que les billes sont guidées d'un côté par l'évidement de guidage (15) d'un serpent intérieur (12, 13) et de l'autre côté par l'évidement de guidage (19, 19a) d'une partie intermédiaire (18, 18a).

2. Unité à recyclage de billes selon revendication 1,
caractérisée
par le fait que la cage (7) est constituée par des serpents intérieurs (12) avec deux gorges de guidage (16) et, dans le cas d'une cage (7) entourant complètement un rail de guidage (2) (figures 14, 15), par des pièces de tête (14) ayant un nombre de parties intermédiaires (18) correspondant à la moitié du nombre de rangées de billes (5), ces parties intermédiaires étant munies latéralement d'évidements de guidage (19) pour guider les billes (8) dans les parties porteuses (9), ou, dans le cas d'une cage (7) n'entourant que partiellement un rail de guidage (2), par des pièces de tête (14) avec un nombre de parties intermédiaires (18, 18a) correspondant à la moitié du nombre de rangées de billes (5), augmenté du nombre un, deux de ces parties intermédiaires (18a) ne présentant chacune qu'un évidement de guidage (19a) et les deux autres possédant chacune deux évidements de guidage (19).

3. Unité à recyclage de billes selon revendication 1,
caractérisée
par le fait que la cage (7) est constituée par des segments intérieurs (12, 13) avec une gorge de guidage et par de tels segments avec deux gorges de guidage (16), ainsi que par des pièces de tête (14), ces éléments présentant des évidements de guidage (15, 19, 19a) se complétant mutuellement pour former les parties porteuses (9) et les parties renvoi (11).

4. Unité à recyclage de billes selon revendication 3,
caractérisée
par le fait que, dans le cas d'une cage (7, figure 1) entourant complètement un rail de guidage, il est prévu deux parties intermédiaires (18) avec deux évidements de guidage (19) pour les billes se trouvant dans deux parties porteuses voisines (9), ou, dans le cas d'une cage entourant partiellement un rail de guidage, il est prévu trois parties intermédiaires, l'une de ces parties intermédiaires présentant deux évidements de guidage pour les billes de deux parties porteuses voisines (9), et les deux autres parties intermédiaires (18a) présentant chacune un évidement de guidage (19a) pour les billes (8) d'une partie porteuse (9) en marge de la fente.

5. Unité à recyclage de billes selon revendication 1,
caracterisée
par le fait que les segments intérieurs (12, 13) sont munis de reliefs radiaux (22) par lesquels ils viennent en prise dans des évidements d'appui (23) de forme correspondante, ou dans des ajours (24) du corps de base (4).

6. Unité à recyclage de billes selon revendication 1,
caractérisée
par le fait que les segments intérieurs (12, 13) et les pièces de tête (14) sont reliés entre eux par des tiges de centrage (27).

7. Unité à recyclage de billes selon revendication 6,
caractérisée
par le fait que les tiges de centrage (27) sont insérées dans des trous (20, 20a, 20b) des segments intérieurs (12, 13) et des pièces de tête (14), ces trous s'étendant parallèlement à l'axe longitudinal (X).

8. Unité à recyclage de billes selon revendication 6,
caractérisée
par le fait que les pièces de tête (14) sont recouvertes, côté extrémité, par des coiffes (26) centrées contre les extrémités du corps de base (4).

9. Unité à recyclage de billes selon revendication 8,
caractérisée
par le fait que les tiges de centrage (27) sont fixées aux coiffes (26).

10. Unité à recyclage de billes selon revendication 9,
caractérisée
par le fait que les tiges de centrage (27) sont fixées aux coiffes (26) par soudage, matage ou vissage.

11. Unité à recyclage de billes selon revendication 6,
caractérisée
par le fait que les tiges de centrage (27) sont agencées dans les parties intermédiaires (18, 18a) des pièces de tête (14).

12. Unité à recyclage de billes selon revendication 6,
caractérisée
par le fait que les tiges de centrage (27) sont agencées entre les deux gorges de guidage voisines (16) des segments intérieurs (12).

13. Unité à recyclage de billes selon revendication 1,
caractérisée
par le fait que les pièces de tête (14) et les segments intérieurs (12, 13) sont munis de moyens de centrage (32, 33) qui se complètent mutuellement.

14. Unité à recyclage de billes selon revendication 13,
caractérisée
par le fait que les pièces de tête (14) sont munies de saillants de centrage (32) dirigés axialement, et les segments intérieurs (12, 13) sont munis d'évidements de centrage correspondants (33).
